(19)

**Europäisches Patentamt**
**European Patent Office**
**Office européen des brevets**

(11)  **EP 3 499 456 B1**

(12)  # EUROPEAN PATENT SPECIFICATION

(45) Date of publication and mention
of the grant of the patent:
**07.09.2022  Bulletin 2022/36**

(21) Application number: **17841437.1**

(22) Date of filing: **09.08.2017**

(51) International Patent Classification (IPC):
***G06T 7/00*** *(2017.01)*

(52) Cooperative Patent Classification (CPC):
**G06T 7/0002; G06T 7/00;** G06T 2207/30168

(86) International application number:
**PCT/JP2017/028953**

(87) International publication number:
**WO 2018/034214 (22.02.2018 Gazette 2018/08)**

(54) **CIRCUIT DEVICE, ELECTRONIC INSTRUMENT, AND ERROR DETECTION METHOD**

SCHALTUNGSVORRICHTUNG, ELEKTRONISCHES INSTRUMENT UND
FEHLERERKENNUNGSVERFAHREN

DISPOSITIF DE CIRCUIT, INSTRUMENT ÉLECTRONIQUE ET PROCÉDÉ DE DÉTECTION
D'ERREUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.08.2016   US 201662375222 P**

(43) Date of publication of application:
**19.06.2019  Bulletin 2019/25**

(73) Proprietor: **Seiko Epson Corporation**
**Tokyo 160-8801 (JP)**

(72) Inventors:
• **ANANDABAIRAVASAMY, Anand Kumar**
**Richmond**
**BC V7E 2H2 (CA)**
• **VAN BAARSEN, John Peter**
**Delta**
**BC V4K 5E3 (CA)**

• **WITTMEIR, Manfred**
**Aichach 86551 (DE)**

(74) Representative: **Miller Sturt Kenyon**
**9 John Street**
**London WC1N 2ES (GB)**

(56) References cited:
**JP-A- H08 152 309      JP-A- S59 116 879
JP-A- 2001 273 492**

• **FARRUGIA R A ET AL: "Enhancing the Error
Detection Capabilities of the Standard Video
Decoder using Pixel Domain Dissimilarity
Metrics", EUROCON, 2007. THE INTERNATIONAL
CONFERENCE ON "COMPUTER AS A TO OL",
IEEE, PI, 9 September 2007 (2007-09-09), pages
1085-1090, XP031222681, ISBN:
978-1-4244-0812-2**

## Description

[Technical Field]

The present invention relates to a circuit device, an electronic apparatus, and an error detection method.

[Background Art]

Hitherto, in display control in a display device (for example, a liquid crystal display device), a processing device such as CPU transmits image data and a control signal to a display controller, the display controller performs image processing and generation of a timing signal, and a display driver drives a display panel with the image data subjected to the image processing and the timing signal. For transmitting image data from the processing device to the display controller, for example, a Low Voltage Differential Signal (LVDS) scheme or a Red-Green-Blue (RGB) serial scheme is used. In the image data received by the display controller in such communication, a data error may occur due to a communication error, or the like. PTLs 1 to 3 disclose a technique of detecting an error of the image data received from a processing device by a display controller by Cyclic Redundancy Check (CRC).

NPTL 1 relates to error Detection of the standard video decoder using pixel domain dissimilarity metrics and provides a method using eight pixel domain dissimilarity metrics computed in the CIE LUV color space which can be used at decode time to improve the error detection rate of the standard decoder.

[Citation List]

[Patent Literature]

[PTL 1] Japanese Unexamined Patent Application Publication No. 2012-35677
[PTL 2] Japanese Unexamined Patent Application Publication No. 2007-101691
[PTL 3] Japanese Unexamined Patent Application Publication No. 2007-72394

[Non-Patent Literature]

[NPTL 1] FARRUGIA R A ET AL: "Enhancing the Error Detection Capabilities of the Standard Video Decoder using Pixel Domain Dissimilarity Metrics", EUROCON, 2007. THE INTERNATIONAL CONFERENCE ON "COMPUTER AS A TOOL", IEEE, 9 September 2007, pages 1085-1090

[Summary of Invention]

[Technical Problem]

When bit error detection such as CRC is used, for example, it is possible to detect one bit error included in image data. However, even if image data includes a minute error such as the one bit error, the actual display image is not much different from the original image, and it is considered that the possibility that a user erroneously recognizes the image (mistakenly recognizes the display image as a different image to the original image) is low. In bit error detection such as CRC, since such a minute error is also detected, it is unsuitable for the purpose of appropriately detecting an error that the user erroneously recognizes. For example, in a case in which an icon or the like is displayed on the display image, bit error detection is not suitable for determining whether or not the user can correctly recognize the icon or the like.

The invention is defined by the independent claims. Preferred embodiments are defined by the dependent claims. Further aspects are provided for facilitating the understanding of the invention.

According to some aspects of the present invention, there are provided a circuit device, an electronic apparatus and an error detection method capable of accurately detecting an error that is likely to be erroneously recognized by a user.

[Solution to Problem]

A first and second aspects of the present invention each relate to a circuit device including: an image acquisition circuit that acquires a display image; and an error detection circuit that performs error detection of the display image, and the error detection circuit is configured to calculate a histogram of pixel values of the display image, perform a correlation operation using the histogram, calculate an index indicating a degree of dissimilarity between a foreground image that is an image of a given region in the display image and a background image that corresponds to a background of the foreground image in the display image based on a result of correlation operation, and perform the error detection based on the index.

According to the first and second aspects of the present invention, the index indicating the degree of dissimilarity between the foreground image and the background image is calculated and the error detection of the display image is performed based on the index from the result of the correlation operation based on the histogram of the display image. This makes it possible to accurately detect the error that is likely to be erroneously recognized by a user. That is, in a case in which the foreground image has a higher degree of dissimilarity than the background image, the foreground image is highly likely to be visually distinguished from the background image. Therefore, by using the index described above, it is possible to determine that an error occurs when the visibility of the foreground image is low.

In the first aspect of the present invention, the error detection circuit calculates the histogram of each of constituent components of a color space, performs autocorrelation operation on the histogram of each of the constituent components, calculates a distance at which a peak of the autocorrelation occurs with respect to each constituent component, and calculates the index based on the maximum distance of the calculated distances.

In this way, it is possible to calculate the index from the constituent component having the largest difference between the foreground image and the background image among the constituent components of the color space. Since the constituent component having the largest difference between the foreground image and the background image is considered to have a large visual difference, the degree of dissimilarity between the foreground and the background can be appropriately evaluated by calculating the index from the constituent component.

In the second aspect of the present invention, the error detection circuit calculates a first histogram of each of constituent components of a color space from the display image as the histogram, calculates a second histogram of each of the constituent components from a reference image corresponding to the foreground image, performs cross-correlation operation on the first histogram and the second histogram for each of the constituent components, and calculates the index based on a peak value of a peak of the cross-correlation.

When the same pattern as the histogram of the reference image is included in the histogram of the display image, an image similar to the reference image in the pattern of at least color or luminance is included in the display image. In this case, since a large peak occurs in the result of the cross-correlation operation, it is possible to appropriately evaluate the degree of dissimilarity between the foreground and the background by calculating the index from the peak value.

In both aspects of the present invention, the error detection circuit may calculate a second index indicating a degree of coincidence between the foreground image that is the image of the given region in the display image and a reference image based on the pixel values of the display image and pixel values of the reference image serving as a reference of the foreground image, or an edge of the display image and an edge of the reference image, and perform the error detection based on the index and the second index.

In this way, it is possible to perform error detection on the display image more accurately by combining an index indicating the degree of dissimilarity of luminance and color between the foreground image and the reference image and the second index indicating the degree of coincidence of shapes between the foreground image and the reference image.

In both aspects of the invention, the image acquisition circuit may generate the display image by overlaying a second image in the given region on a first image, and the background image may be an image corresponding to the first image in the display image.

In this way, for example, it is possible to generate the display image by overlaying an icon, a character, or the like on the input image. In this case, the overlaid character or icon corresponds to the foreground image, and the other original input image portion corresponds to the background image. According to the aspect of the present invention, by performing error detection on such a display image, it is possible to determine that an error occurs when the icon or the character is not overlaid properly (that is, so as to be recognizable by a user).

A still another aspect of the present invention relates to an electronic apparatus including the circuit device according to any one of the above.

A still another aspect of the present invention relates to an error detection method including: calculating a histogram of pixel values of a display image; performing a correlation operation using the histogram; calculating an index indicating a degree of dissimilarity between a foreground image that is an image of a given region in the display image and a background image that corresponds to a background of the foreground image in the display image based on a result of correlation operation; and performing the error detection on the display image based on the index.

The step of calculating a histogram comprises calculating the histogram of each of constituent components of a color space, the step of performing a correlation operation comprises performing an autocorrelation operation on the histogram of each of the constituent components, and the step of calculating an index comprises calculating a distance at which a peak of the autocorrelation occurs with respect to each constituent component, and calculating the index based on the maximum distance of the calculated distances.

A still another aspect of the present invention relates to an error detection method including: calculating index indicating a degree of coincidence between a foreground image that is the image of a given region in the display image and a reference image based on pixel values of the display image and pixel values of the reference image serving as a reference of the foreground image, or based on pixel values of an edge image of the display image and pixel values of an edge image of the reference image; and performing error detection on the display image based on the index.

The step of calculating a histogram comprises calculating a first histogram of each of constituent components of a color space from the display image as the histogram and calculating a second histogram of each of the constituent components from a reference image corresponding to the foreground image, the step of performing a correlation operation comprises performing a cross-correlation operation on the first histogram and the second histogram for each of the constituent components, and the step of calculating an index comprises calculating the index based on a peak value of a peak of the cross-correlation.

[Brief Description of Drawings]

[Fig. 1] Fig. 1 shows a constructional example of a circuit device of a present embodiment.
[Fig. 2] Fig. 2 is a flowchart showing a processing flow of error detection processing.
[Fig. 3] Fig. 3 is a histogram of each channel of YCbCr in a region of interest.
[Fig. 4] Fig. 4 shows autocorrelation values obtained by performing autocorrelation operation on the histogram.
[Fig. 5] Fig. 5 shows a first example of a display image.
[Fig. 6] Fig. 6 shows an example of a histogram in a case in which a foreground is multi-tone.
[Fig. 7] Fig. 7 shows an example of cross-correlation values of a histogram in a case in which a foreground is multi-tone.
[Fig. 8] Fig. 8 shows an example of a reference image.
[Fig. 9] Fig. 9 shows an averaged image of the reference image.
[Fig. 10] Fig. 10 shows a second example of the display image.
[Fig. 11] Fig. 11 shows a third example of the display image.
[Fig. 12] Fig. 12 shows a fourth example of the display image.
[Fig. 13] Fig. 13 shows a first example of a reference image, a display image (region of interest), and a mask image.
[Fig. 14] Fig. 14 shows an example of edge values calculated from the reference image and the display image of the first example.
[Fig. 15] Fig. 15 shows a second example of a reference image, a display image (region of interest), and a mask image.
[Fig. 16] Fig. 16 shows an example of edge values calculated from the reference image and the display image of the second example.
[Fig. 17] Fig. 17 is a constructional example of an electronic apparatus.

[Description of Embodiments]

Hereinafter, preferred embodiments of the present invention will be described in detail. The embodiments described below do not unduly limit the contents of the present invention described in claims, and all of the configurations described in the present embodiments are not necessarily essential as solving means of the present invention.

1. Circuit Device

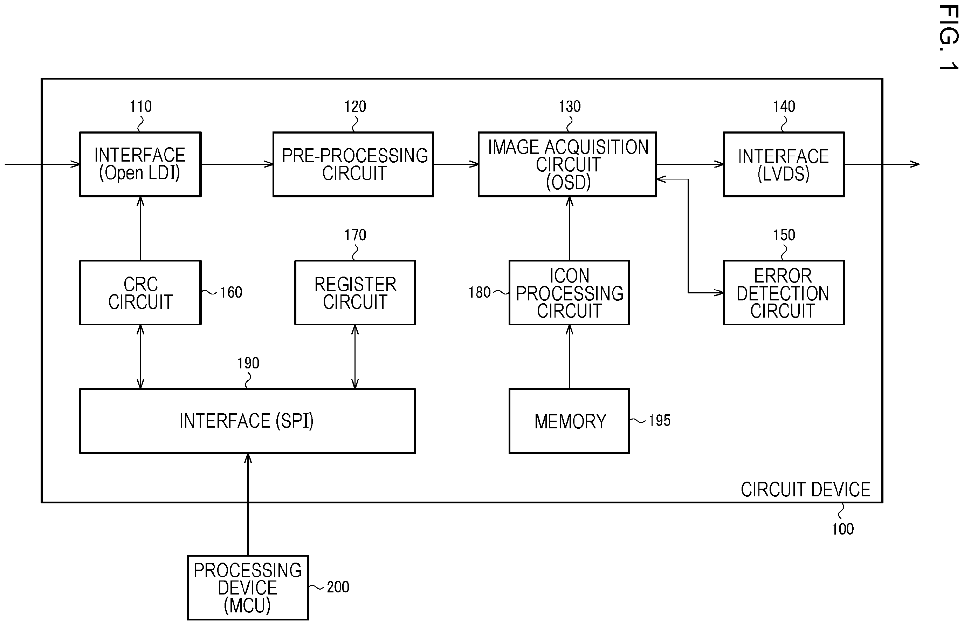

Fig. 1 is a constructional example of a circuit device of a present embodiment. The circuit device 100 includes an interface 110 (first interface), a pre-processing circuit 120 (image processing circuit), an image acquisition circuit 130 (on-screen display circuit), an interface 140 (second interface), an error detection circuit 150, a cyclical redundancy check (CRC) circuit 160, a register circuit 170, an icon processing circuit 180 (icon color expansion circuit), an interface 190 (third interface), a memory 195 (storage circuit), or the like. The circuit device 100 is, for example, an integrated circuit device (IC).

The interface 110 receives, for example, image data transmitted from a processing device 200 or the like to the circuit device 100, and converts the received image data into a format to be used in the circuit device 100. For example, the interface 110 is an Open LVDS Display Interface (Open LDI), and converts a serial signal received by Low Voltage Differential Signaling (LVDS) into an RGB parallel signal. The processing device 200 is, for example, a Micro-Control Unit (MCU), a Central Processing Unit (CPU), or the like.

The pre-processing circuit 120 performs various types of image processing on image data input from the interface 110. For example, the pre-processing circuit 120 performs gamma correction, frame rate control (FRC), white balance processing. For example, a one-dimensional lookup table for each of an R channel, a G channel, and a B channel is stored in the memory 195 (or the register circuit 170 or a nonvolatile memory(not shown)), and the gamma correction is performed for each channel using the lookup table. FRC performs processing for representing pseudo immediate gradation by switching the gradation between frames. In the white balance processing, for example, a one-dimensional lookup table for adjusting the white balance is stored in the memory 195 (or the register circuit 170 or a non-volatile memory (not shown)), and the RGB channel is adjusted using the lookup table.

The icon processing circuit 180 generates (or acquires) an icon image. For example, a mask image of an icon is stored in the memory 195, and an icon image is generated by converting the mask image into an RGB image. The mask image is a k-bit image in which each pixel has k bits of data. k is an integer of 1 or more. The $2^k$-th index color table is stored in the memory 195 (or the register circuit 170 or a non-volatile memory (not shown)), and k-bit data (index) is converted into RGB data according to the color table. For example, when k = 2, the color table is a lookup table in which four colors are associated with a 2-bit index. Alternatively, when k = 1, the color table is a lookup table in which two colors are associated with an one-bit index, and a specific color is associated with "0" representing a background pixel, and another color (a specific color different from the background) is associated with "1" representing a foreground pixel. The memory 195 is, for example, a RAM such as an SRAM.

The image acquisition circuit 130 overlays the icon image on the image input from the pre-processing circuit 120 (hereinafter, referred to as the input image) to combine the icon image with the input image, and outputs the combined image to the interface 140 as a display image (rendered image). For example, the image acquisition circuit 130 overlays the icon image on the input image so that the icon image completely hides the background (input image) (so that the background cannot be seen). Alternatively, The icon image and the background may be blended (a blended) at a given blend ratio. The position at which the icon image is overlaid on the input image is set to, for example, the register circuit 170 (or the memory 195 or a nonvolatile memory (not shown)).

The error detection circuit 150 performs detection of an error of the display image by image analysis. That is, it is checked by image analysis whether or not the icon image is correctly combined with the input image. The error detection circuit 150 calculates the index indicating whether the image of a region of interest (ROI) is correctly displayed from the region of interest of the display image, and performs error detection based on the index. The region of interest is a region including the icon in the display image. The index is a visibility index for evaluating the visibility of the icon and a shape index for evaluating similar positiveness between the shape of the icon and the reference (for example, mask image). The indices will be described below.

The interface 140 outputs the display image to the outside of the circuit device 100 (for example, a display driver for driving the display panel). For example, the interface 140 is an LVDS interface, and converts an RGB parallel signal from the image acquisition circuit 130 into an LVDS serial signal. When an error is detected by the error detection circuit 150, the interface 140 stops the output of the display image. Alternatively, the display image is output together with error information (for example, an error determination flag, index, or the like) detected by the error detection circuit 150, and the display driver that has received the error information may perform an operation (stopping display) based on the error information.

The interface 190 allows setting information, control information, and the like to communicate between the circuit device 100 and the processing device 200. For example, the interface 190 is a serial communication interface of a Serial Peripheral Interface (SPI) method or an I2C method. The setting information and the control information from the processing device 200 are written to the register circuit 170, for example, and the circuit device 100 performs an operation according to the setting information and the control information.

A CRC circuit 160 performs error detection by CRC on the image data received by the interface 110. That is, the CRC value (reference) input from the processing device 200 through the interface 190 is compared with the CRC value calculated from the image data received by the interface 110, and it is detected whether the values coincide with each other.

Logic circuits (for example, the pre-processing circuit 120, the image acquisition circuit 130, the error detection circuit 150, the CRC circuit 160, the icon processing circuit 180) included in the circuit device 100 may be, for example, configured as individual circuits, or configured as a circuit integrated by automatic layout and wiring. In addition, some or all of the logic circuits may be implemented by a processor such as a Digital Signal Processor (DSP). In this case, a program or instruction set in which a function of each circuit is stored in the memory, and the processor executes the program or instruction set, thereby implementing the function of each circuit.

2. Error Detection Processing

Hereinafter, an error detection processing performed by the error detection circuit 150 will be described.

In the image processing system displaying content on a display, there is a case where it is necessary to check whether or not a predetermined region of the image coincides with the region of the original intention. For example, it is considered that an important image is displayed on a cluster display (display of a meter panel) of a system for a vehicle. Here, it is necessary to display predetermined important information through a visible image overlaid on the existing content that is displayed on the display. Below, some methods for detecting whether or not the image is correctly displayed will be described. The detection is performed by analyzing the region of interest (ROI) and deriving a key index indicating the degree to which the region is correctly displayed.

Hereinafter, a method and a concept of verifying the display image with regard to the reference are used. It is achieved by calculating the degree of coincidence of the display image with the reference image. Hereinafter, a case of considering the region of interest (ROI) in the display image will be described, but it is possible to be easily expanded to the entire image (by setting ROI at the boundary of the entire image). Hereinafter, an example of applying the method (algorithm) of the present invention to a color image will be described, but the method of the present invention can be also applied to a grayscale image or a binary image (black and white image).

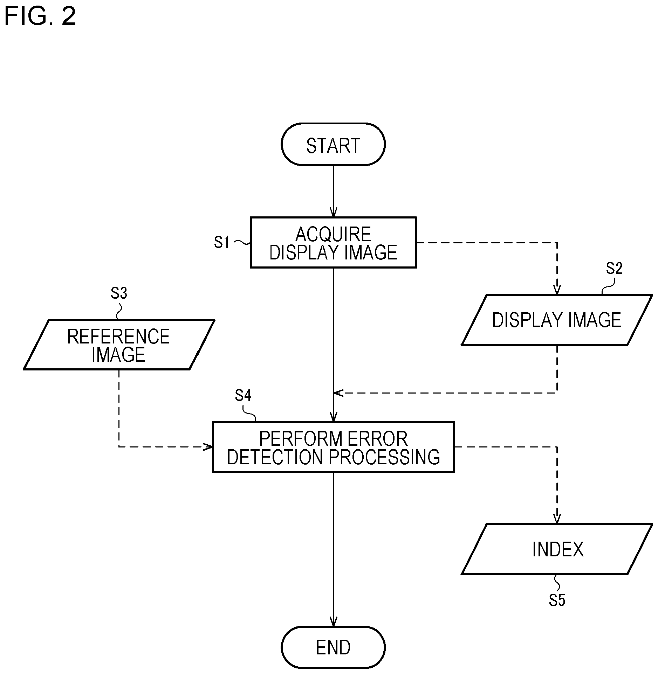

Fig. 2 is a flowchart showing a processing flow of error detection processing. In the error detection processing, the display image is acquired by overlaying the icon image on the input image (S1, S2). Next, error detection processing is performed by comparing the reference image (S3) with the display image (S2) (S4), and the index is calculated (S5). The reference image is not necessarily acquired. For example, when a visibility index is calculated, the reference image is not used, but only the display image is used so as to calculate the index.

In the error detection processing, the validity of the display image (or part of the display image) is checked by comparing the display image with the reference image. In the above comparison, color deviation, luminance change, scaling, or change by predetermined intentional image conversion is not detected as an error, and other significant errors such as deformation due to unintended rotation and errors due to crop or noise which makes it impossible for a user to recognize the image are detected.

To this end, two indices, a visibility index and a shape index are used. The visibility index is a numerical value defining the degree to which the image of the region of interest can be visually recognized without blending into the background. It is also possible to define the region of interest to include the entire image.

As described above, the error detection processing is applied to the color image (by using one channel in gray or by using only two values for a binary image in one channel, it is also applied to black and white or grayscale images (subsets)). Therefore, pixels in the region of interest in the display image are converted from the RGB format into the YCbCr format. However, the method of the present invention can also be applied to other color spaces (for example, Lab or Hsv).

2.1. First Operation Method for Calculating Visibility Index (First Index)

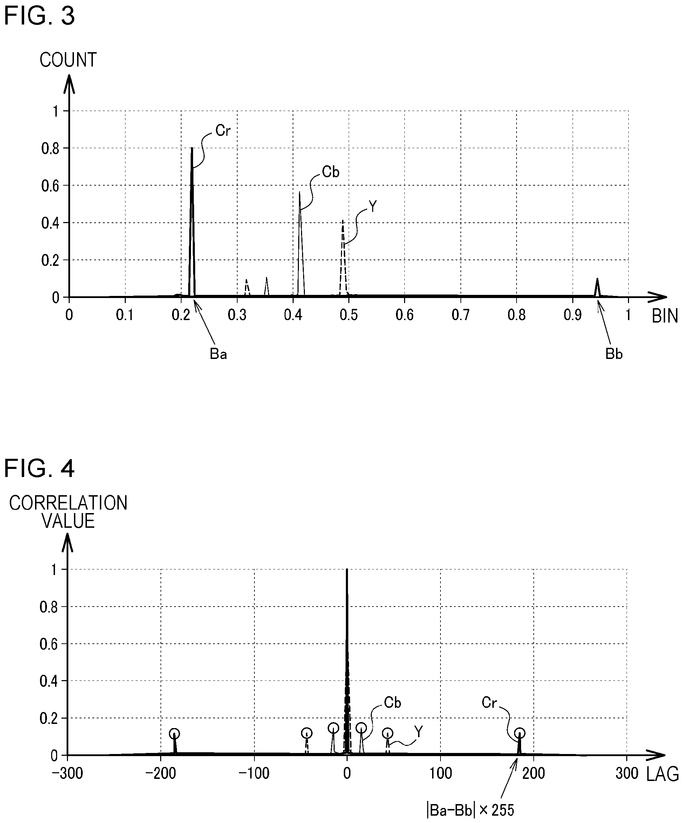

Fig. 3 is a histogram of each channel of YCbCr in a region of interest. Fig. 4 shows autocorrelation values obtained by performing autocorrelation operation on the histogram.

As shown in Fig. 3, for each channel of the YCbCr image, the histogram is calculated using n bins. For example, it is possible to generate the histogram with different bins by using 256 bins.

The histogram counts the number of times a particular value occurs in the region of interest. That is, for each channel of the YCbCr image, the number of pixels having the value indicated by each bin is counted within the region of interest. Next, the histogram is normalized to values between 0 to a. The value "a" can be selected in consideration of ease of implementation (for example, 1 or 255). In Fig. 3, a = 1. Next, the histogram of each channel is cross-correlated with itself (autocorrelation operation) and the autocorrelation signal is used for subsequent analysis. As shown in Fig. 4, the autocorrelation signal is normalized so that the peak value is 1 (or preset value) at zero lag.

The autocorrelation value is obtained by the following expression (1). f and g represent functions (signal, here histogram) to be correlated, f = g in a case of autocorrelation. f * g represents a correlation operation between the function f and the function g. f* represents a complex conjugate of the function f, and in the present embodiment, f* = f. m is the bin number of the histogram. n represents lag, and in Fig. 4, n is an integer from -255 to +255.

[Math. 1]

$$(f * g)[n] = \sum_{m=-\infty}^{\infty} f^{*}[m]g[m+n]$$

$$(1)$$

In the histogram of Fig. 3, since 256 bins are normalized between 0 and 1, the horizontal axis ranges from 0 to 1. The correlation value in Fig. 4 is obtained while varying the lag by one bin, and so the horizontal axis ranges from -(256 - 1) to +(256 - 1).

As shown in Fig. 4, when two-tone image is present in the region of interest, a sideband is obtained by autocorrelation operation. The distance of the lag from the center of the peak that occurs (zero lag) indicates contrast between the tones. Since the human eye can distinguish features of the image by contrast (luminance contrast and color contrast), check is performed for the peaks of all three channels. In Fig. 4, the Y channel is indicated by a dotted line, the Cb channel is indicated by a thin solid line, and the Cr channel is indicated by a bold solid line. Check is performed by setting the threshold of the peak search (so as not to pick up the noise of the autocorrelation signal). For example, the minimum peak threshold is set to 0.05. A local maximum value is obtained by searching a peak in the signal (a peak of a peak value larger than the threshold).

In order to avoid an in-band signal peak, it is also possible to set the minimum distance between consecutive peaks to a predetermined value. The threshold is an adjustable value, and selected depending on the application.

In order to calculate the first index indicating whether the distinguishable image is shown on the background (two or more tones) or not, after finding all peaks of the autocorrelation signal exceeding the noise threshold for all the channels, the maximum distance (lag) at which the peaks occur is obtained. The maximum value among lags in which peaks occur in the three channels is selected as the index indicating visibility.

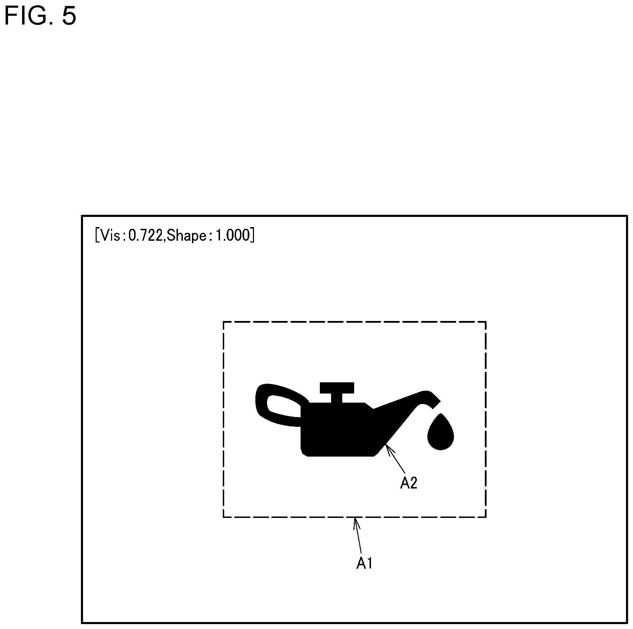

In the correlation plot shown in Fig. 4, peaks are indicated by circles. In the illustrated example, the Cr channel shows the greatest separation and the distance is 184. The above value is normalized to the maximum lag possible (for example, the maximum lag possible is 256, which is the number of histogram bins). Therefore, the index value is 184/255 = 0.722. In the image shown in Fig. 5, the index value is shown as a Vis parameter. The above operation is an example.

Fig. 5 shows a first example of a display image (analysis image). A1 is a region of interest and A2 is an icon. The dotted line indicating the region of interest is not actually drawn on the display image. For example, the inside of the icon A2 (the portion shown in black in Fig. 5) is red, and the background of the icon (the portion shown in white in Fig. 5) is green.

In the image of Fig. 5, since there are two pixels of red and green in the region of interest, in the histogram shown in Fig. 3, two peaks (large and small peaks) are generated in each channel of YCbCr. For example, in the Cr channel, peaks are generated in the bins Ba and Bb. The distance between the two peaks represents a contrast between the color of the foreground (icon) and the color of the background, which means that the larger the distance is, the more the colors of the foreground and the background are different. The distance between the two peaks in the histogram is the lag distance at which the peak occurs in the autocorrelation value shown in Fig. 4. In the image of Fig. 5, since the foreground (icon) is red and the background is green, the distance between the two peaks of the Cr channel in the histogram shown in Fig. 3 is the maximum distance, and the distance is $|Ba - Bb| \times 255$. This is detected as the maximum distance at which the peak occurs in the autocorrelation value shown in Fig. 4, and the normalized index value is $|Ba - Bb|$. Accordingly, the larger the contrast between the color of the foreground (icon) and the color of the background, the larger the index value of visibility.

The error detection circuit 150 performs error detection based on the visibility index calculated as described above. For example, the visibility index is compared with a given threshold, and when the visibility index is smaller than the given threshold, it is determined as an error. Alternatively, the visibility index may be output to the outside of the circuit device 100 as the error detection result.

2.2. Second to Fourth Operation Methods for Calculating Visibility Index

In the second Operation method, a visibility index is calculated by using cross-correlation operation.

In the first operation method, autocorrelation operation is used to check the visibility of the reference within the region of interest. In this case, the reference image does not include information (such as color) regarding the background image. Therefore, only the composite image (display image) is analyzed so as to check whether or not the composite image includes two or more tones.

In the second operation method, it is assumed that the reference image includes all information (for example, a case where a source image is changed by display processing). In this case, it is possible to generate a histogram of the reference image in the same way as the histogram of the analysis image (display image), and perform cross-correlation operation between the histogram signals of the reference image and analysis image instead of the autocorrelation operation. Mathematically, the autocorrelation operation is the cross-correlation operation of the signal itself. Therefore, it is possible to perform cross-correlation operation or autocorrelation operation by changing only the input signal for correlation operation. That is, in the above expression (1), the histogram of the reference image is placed to one of f and g, and the histogram of the display image is placed to the other of f and g.

In a case of the cross-correlation operation, instead of determining the distance of the peak from the center, it is checked whether or not a peak exceeding a predetermined threshold is present in the cross-correlation signal. When such a peak is present, as long as the distribution of pixels is considered, the reference image and the analysis image considerably coincide with each other. As a result, it is possible to perform error detection at the first level on the analysis image. The parameter does not show spatial correlation (pixel distribution correlation only). In this case, the index may be the peak value itself, not the distance of the peak from the center in autocorrelation operation.

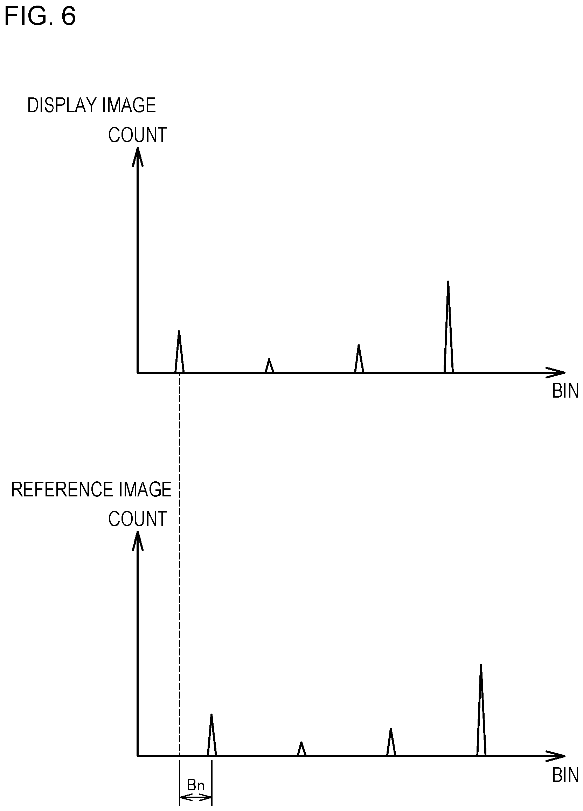

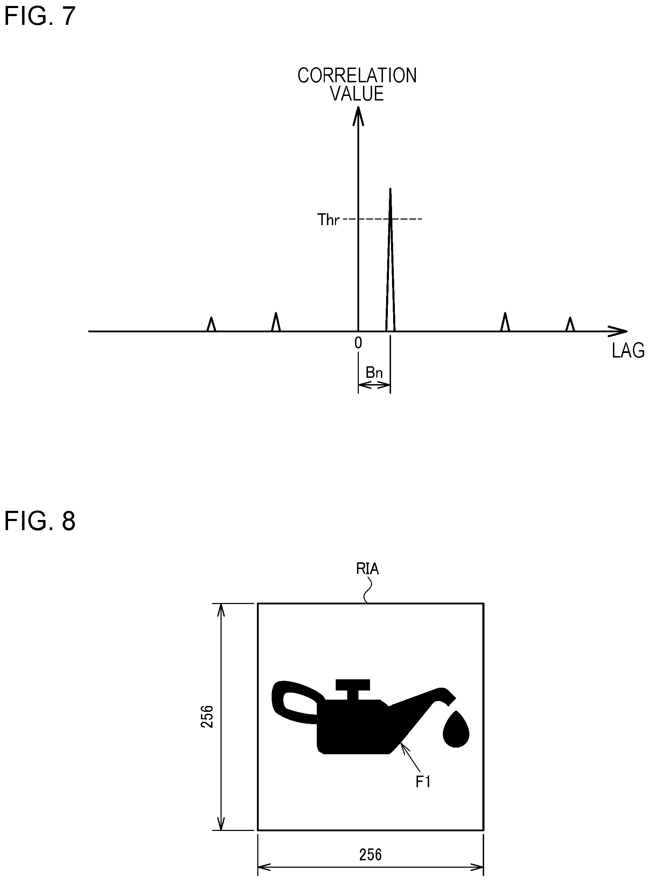

Fig. 6 shows an example of a histogram in a case in which a foreground such as an icon is multi-tone (two or more tones). Fig. 7 shows an example of cross-correlation values of the histogram of Fig. 6. Here, one channel of a color image is described, but the same processing is performed for a plurality of channels. For example, the maximum peak value among the peaks of cross-correlation values of a plurality of channels may be employed.

As shown in Fig. 6, in the histogram of the display image (composite image) and the reference image, three or more peaks (four in Fig. 6) occur. It is assumed that the peak of the histogram of the display image and the peak of the histogram of the reference image are shifted by Bn. In this case, as shown in Fig. 7, a large peak appears at the lag Bn in the cross-correlation value. When the peak value of the peak is larger than the threshold Thr, for example, the value of the peak is employed as the index value of visibility.

In the third operation method, a contrast ratio of the foreground and the background is obtained as the index value of visibility.

In the first operation method, the difference |Ba - Bb| of bins Ba and Bb where peaks occur in the histogram of the Cr channel is used as the index value of visibility.

In the third operation method, the contrast ratio |Ba - Bb|/Ba or |Ba - Bb|/Bb is obtained and used as an index value of visibility. Alternatively, when the reference image is used as in the second operation method, C1 = |Ba - Bb| in the reference image and C2 = |Ba - Bb| in the display image are obtained and the contrast ratio C1/C2 or C2/C1 is obtained, and the obtained ratio is used as the index value of visibility.

In the fourth operation method, a multidimensional histogram is generated to calculate an index of visibility.

In the first operation method, the histogram (one-dimensional histogram) of each channel is used for visibility analysis.

In the fourth operation method, the multidimensional histogram is generated from signals of a plurality of channels, multidimensional correlation operation (multidimensional autocorrelation operation or multidimensional cross-correlation operation) is performed on the multidimensional histogram, and the index of visibility is calculated. In this way, it is possible to better simulate the detection of contrast with human eyes. By using the 3D color histogram, better performance can be obtained.

According to the embodiment described above, the circuit device 100 includes the image acquisition circuit 130 for acquiring the display image, and the error detection circuit 150 for performing error detection on the display image. The error detection circuit 150 calculates the histogram (Fig. 3) of pixel values of the display image (each channel of YCbCr), and performs correlation operation using the histogram (Fig. 4). The error detection circuit 150 calculates the index (index of visibility, the first index) indicating the degree of dissimilarity between the foreground image that is the image in the given region in the display image and the background image corresponding to the background of the foreground image in the display image based on the result of the correlation operation, and performs the error detection based on the index.

In this way, it is possible to perform error detection on the display image based on the index indicating the degree of dissimilarity between the foreground image of the display image and the background image, instead of bit error detection such as CRC. When the degree of dissimilarity of the foreground image with respect to the background image is high, it is highly likely that the foreground image is visually distinguished from the background image, and accordingly the visibility of the foreground image is considered to be high. That is, according to the present method, it is possible to determine that an error occurs when the visibility of the foreground image is low. For example, on a vehicle mounted meter panel or the like, an icon for warning a user is displayed. According to the present embodiment, without stopping displaying such an icon by one-bit error, or the like, it is possible to display as much as possible in a case where visibility is secured, and to warn a user.

Here, in Fig. 1, the image acquisition circuit 130 is an On Screen Display (OSD), but is not limited thereto. The image acquisition circuit 130 may be any circuit that acquires an arbitrary display image. Details are described in "3. Modification Example". The display image may be an image generated for display on a display (display device). In the embodiment described above, the display image is an image rendered by OSD, but it is not limited thereto. For example, it may be an image generated by an image processing, an image received by communication, or an image read from a memory.

Error detection is to output the result of error detection based on the index, for example, to determine whether an error is present on the display image based on the index. Alternatively, the index may be output as an error detection result. For example, the higher the degree of dissimilarity between the foreground image and the background image is, the greater the value of the index is. In this case, when the index is smaller than a given value, it is determined that the display image contains an error.

Further, the foreground image is an image of a region to determine the degree of dissimilarity with the background image by the index among the display images. Also, the region is a given region. For example, A mask image for designating the foreground is prepared (stored in the memory), and pixels of the foreground image (the given region) are specified by pixels defining the foreground (for example, pixels of "1" in a one-bit mask) in the mask image. More specifically, a position on the display image to which the mask image defining the foreground is applied (for example, a position at which an icon is overlaid) is designated, and the foreground is specified from the position and the mask image.

The background image is a part or the whole of the display image excluding the foreground image. That is, the region of interest (the region including the foreground image) is set in part or the whole of the display image and the image of the region excluding the foreground image out of the region of interest is the background image. For example, the pixels of the background image are specified by the pixels defining the background in the mask image (for example, pixels of "0" in a 1-bit mask).

The degree of dissimilarity is the degree of dissimilarity in each of the constituent components (channels) of the color space. For example, in the YCbCr space, the degree is a degree indicating how much the luminance of the foreground image is different from the luminance of the background image, or how much the color of the foreground image is different from the color of the background image. Alternatively, in the RGB space, it is the degree indicating how much the color of the foreground image is different from the color of the background image.

In the present embodiment, the error detection circuit 150 calculates a histogram of each of the constituent components (channels) of the color space (Fig. 3), performs autocorrelation operation on the histogram of each of the constituent components, obtains distances at which peaks of the autocorrelation occurs for each constituent component (Fig. 4), and calculates the index (index of visibility) based on the maximum distance ($|Ba - Bb|$) from the obtained distances.

In this way, it is possible to calculate the index by a constituent component having the largest difference between the foreground image and the background image among the constituent components of the color space. Since it is considered that the constituent component having the largest difference between the foreground image and the background image shows a visually large difference, it is possible to appropriately evaluate visibility of the foreground (the degree of dissimilarity with the background) by calculating the index from the constituent component.

Here, the index may be a value obtained based on the maximum distance $|Ba - Bb|$. For example, in the first operation method, the index is the maximum distance $|Ba - Bb|$ itself. In the second operation method, the index is the contrast ratio (such as $|Ba - Bb|/Ba$) based on the maximum distance $|Ba - Bb|$.

In the present embodiment, the error detection circuit 150 calculates a first histogram of each of the constituent components of the color space from the display image as a histogram, and calculates a second histogram of each constituent component from the reference image corresponding to the foreground image (Fig. 6). The error detection circuit 150 performs cross-correlation operation between the first histogram and the second histogram for each constituent component and calculates the index based on the peak value of the cross-correlation peak (Fig. 7).

In this way, even when the reference image contains two or more tones (multi-tone), it is possible to calculate the index indicating the degree of dissimilarity between the foreground image and the background image. That is, although two or more peaks occur in the histogram of the reference image, when the same pattern as the histogram is included in the histogram of the display image, at least an image similar to the reference image in the color or luminance pattern is included in the display image. In this case, since a large peak occurs in the result of the cross-correlation operation, it is possible to appropriately evaluate visibility of the foreground (degree of dissimilarity with the background) by calculating the index from the peak value.

Here, the reference image is an image corresponding to the foreground image in a case where it is assumed that the foreground image is correctly displayed in the display image. More specifically, the reference image is the same image as the foreground image in at least the pattern of the peak in the histogram. At this time, as shown in Fig. 6, the relative positional relationship between the peaks may be the same, and the entire pattern may be shifted.

In addition, in the present embodiment, the error detection circuit 150 calculates a second index (shape index) indicating the degree of coincidence between the foreground image and the reference image based on the pixel values of the display image and the pixel values of the reference image serving as the foreground image, or the edge of the display image and the edge of the reference image, and performs error detection based on the index (index of visibility) and the second index (shape index).

In this way, it is possible to perform error detection on the display image by combining two indices evaluated for properties different from each other. That is, by combining the index indicating the degree of dissimilarity of luminance and color between the foreground image and the reference image with the second index indicating the degree of coincidence of shape between the foreground image and the reference image, it is possible to perform error detection on the display image more accurately. The second index (shape index) will be described later in detail.

Further, in the present embodiment, the image acquisition circuit 130 overlays the second image in a given region on the first image to generate the display image. The background image is an image corresponding to the first image in the display image.

In this way, it is possible to generate the display image by overlaying an icon or a character, for example, on the input image by OSD. In this case, the overlaid character or icon corresponds to the foreground image, and the other original input image portion corresponds to the background image. In the present embodiment, by performing error detection on such a display image, it is possible to determine an error when the icon or the character is not properly overlaid (that is, so that a user can visually recognize) in OSD. On the other hand, even if a processing error of about 1 bit occurs in the overlay, since an error is not determined when visibility can be secured, the icon or the character can be presented to the user.

Further, the present embodiment can be practiced as the following error detection method. That is, in the method, a histogram of pixel values of a display image is calculated, a correlation operation is performed using the histogram, an index indicating a degree of dissimilarity between a foreground image serving as an image of a given region of interest in the display image and a background image corresponding to the background of the foreground image in the display image based on the result of the correlation operation, and error detection of the display image is performed based on the index.

In addition, the present embodiment can be practiced as the following error detection method. That is, in the method, a region of interest of a display image is analyzed, and an index describing visibility of a foreground with respect to a background is calculated (in this case, a reference image may be used as a mask so as to specify the foreground). The index is calculated using the following technique (a) or (b): (a) Look for the separation between the foreground and the background using the histogram of the display image; and (b) Calculate the contrast ratio between the foreground and the background.

2.4. First Operation Method of Shape Index (Second Index)

A shape index is an index indicating whether or not a region of interest of an analysis image (display image) coincides with the reference image. Hereinafter, an operation method for the shape index will be described.

First, blocks of pixels of ROI of an analysis image are averaged so that a final averaged image is m × n pixels. The sub-sampling processing is performed because a small number of pixel errors are not detected as a significant error, and these errors (color shift, small distortion, and the like) are ignored and the overall shape of the reference image and the analysis image is confirmed. To obtain a perfect coincidence, the resolution of the sub-sampled image can be increased. The value of m × n can be selected according to an application. In a case where the value of m × n is used in conjunction with the reference image as described below, the value of m × n is selected from sample data observation.

When the region of interest of the analysis image is u × v pixels, the averaged block size is u/m × v/n pixels. When reference background information cannot be used, pixels of the analysis image on the portion in which the reference pixels are not present are deleted. This corresponds to the reference foreground masking. This is done because it is necessary to baseline the background pixels between the reference image and the analysis image (to arrange them to have the same condition). Therefore, the values of the background pixels are set to the same values in both the analysis image and the reference image.

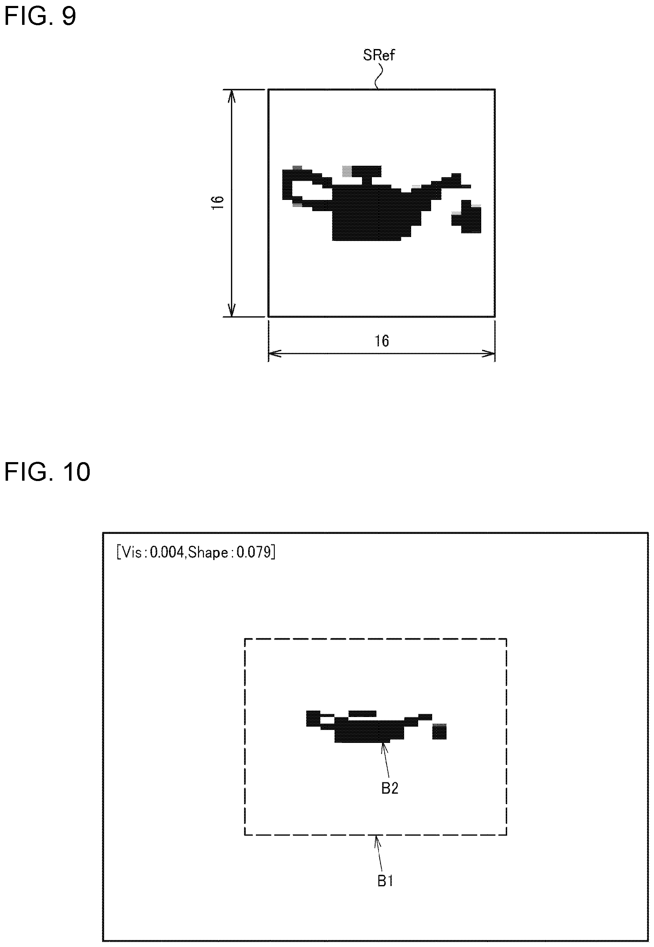

The averaging of the reference image is also made to be m × n pixels. Averaging is separately performed on each channel. Fig. 8 shows an example of a reference image. A foreground F1 (icon) of a reference image RIA is colored, and a background (region other than the icon) is, for example, colorless, such as black. In Fig. 8, the size of the reference image RIA is 256×256 pixels. Fig. 9 shows an averaged image of the reference image. In Fig. 9, the size of the averaged image SRef is 16×16 pixels (m = n = 16). Since the background of the reference image and the averaged image is colorless, the background of the region of interest of the analysis image is also converted to be colorless (background is deleted), and the averaged image of the region of interest is obtained.

Next, the averaged image (SRef m × n) of the reference image and the averaged image (SAnz m × n) of the region of interest of the analysis image are compared for each pixel using the distance reference, and a distance D (a three-dimensional distance) is obtained as in the following expression (2). In the present embodiment, the distance reference is the square of the Cartesian distance, but similar parameters can be obtained even with other distance references.

[Math. 2]

$$D = \sum_{c=1}^{3} \sum_{y=1}^{n} \sum_{x=1}^{m} \left( \left[ R_{xyc} - R'_c \right] - \left[ A_{xyc} - A'_c \right] \right)^2$$

$$(2)$$

c represents the channel, x represents the pixel position in the lateral (horizontal) direction in the averaged image, and y represents the pixel position in the longitudinal (vertical) direction in the averaged image. m and n are the sizes of the averaged image. $R_{xyc}$ represents the pixel value at the position (x, y) of the averaged image of the reference image in the channel c. $R'_c$ represents the average value of the $R_{xy}$ pixels in the channel c ($R_{xyc}$ averaged within the averaged image). $A_{xyc}$ represents the pixel value at the position (x, y) of the averaged image of the analysis image in the channel c. $A'_c$ represents the average value of $A_{xy}$ pixels in the channel c ($A_{xyc}$ averaged over the averaged image).

The reason the average value is subtracted in each channel is to prevent a small difference between the reference image and the analysis image from being processed as an error. When the complete coincidence is achieved, it is possible to set the average value to zero. In this case, the coincidence of shape and color is checked according to the distance reference.

The analysis image (display image) is shown, for example, in Fig. 5. The region of interest A1 is extracted around the reference (around the region where the reference image is combined with the input image). In Fig. 5, the region of interest is defined in the dotted rectangle.

The shape index S (shape parameter) is derived from the distance parameter by the following expressions (3) and (4). T is a threshold, for which any value is employed. When D < T, T/D = 1, and the shape index S does not change.

[Math. 3]

$$S = f\left(\frac{T}{D}\right) \qquad (3)$$

[Math. 4]

$$D = T \quad if \quad D < T \qquad (4)$$

The function f is selected so that the hardware is easily mounted. For example, the function f may be a scaling function K such that the range from 0 to 1 is scaled from 0 to k. In the example described below, the function f is a unit function (that is, S = T/D). The shape index S indicates the degree of coincidence of shape between the reference image and the analysis image. In a case where the images do not coincide with each other, this value decreases, and tends to be zero. An example thereof will be described below.

In Fig. 5, the icon of the reference image is correctly displayed on the analysis image. In the case, the shape index is S = 1 (Shape: 1.000 in Fig. 5).

Fig. 10 shows a second example of the display image. B1 represents a region of interest. As shown in B2 of Fig. 10, the icon of the reference image is unclear in the analysis image. That is, some of the reference pixels are not present in the analysis image, and the shape index S is less than one (when the function f is a unit function). In a case of such an unclear foreground, both the index of visibility and the shape index are small values.

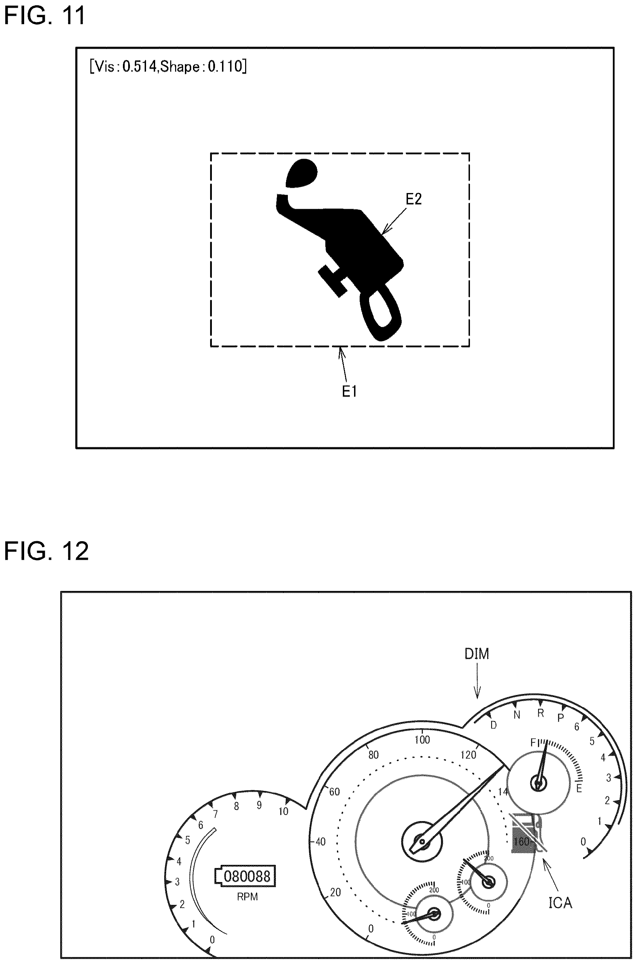

Fig. 11 shows a third example of the display image. E1 represents a region of interest. As shown in E2 of Fig. 11, the icon of the reference image is rotating in the analysis image. In the example, since the shape is rotating from the reference, the shape index S is less than 1 (when the function f is a unit function). When the foreground is rotating, the index of visibility is a relatively large value, and the shape index is a small value. In this manner, error detection can be properly performed in various foreground states by combining the index of visibility with the shape index, and accuracy of error detection can be improved.

The case where the analysis image and the reference image can be used as images is described above, but the present invention is not limited thereto. For example, even when the image is streamed as a line, pixel or sub image, the same operation can be easily performed.

The above shape index checks only the coincidence of the base signal. In the case of an image with low visibility, it is possible to convolve an edge detection kernel (Laplacian or Sobel, or the like) with the region of interest of the analysis image and the reference image to generate a primary gradient image, and then to obtain parameters by the shape calculation algorithm. A misdetection obtained by the shape index can be eliminated by the shape index. In this way, it is possible to obtain the correct result of error detection even in a case of the image with low visibility.

2.5. Second Operation Method of Shape Index

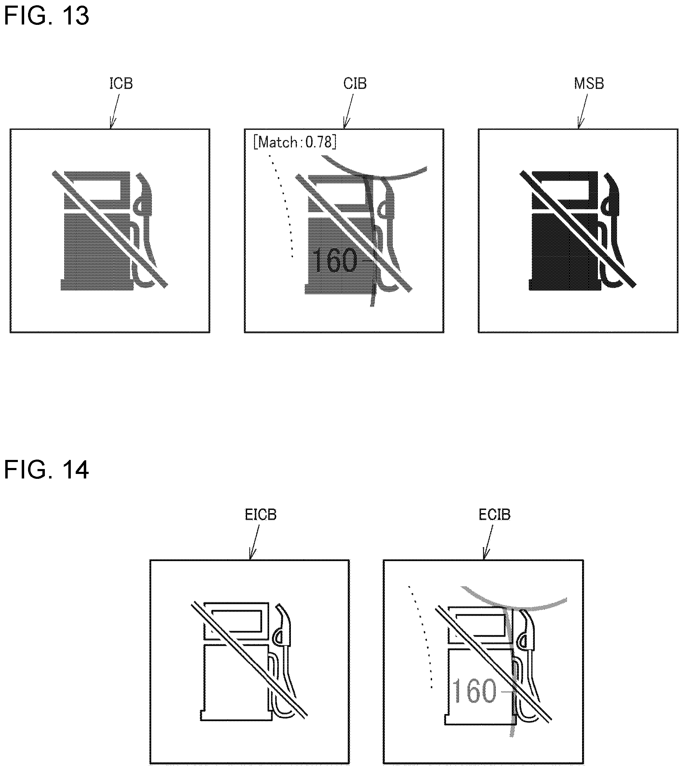

Fig. 12 shows a fourth example of the display image. In Fig. 12, an example of overlaying an icon ICA on a dashboard image DIM is shown. The foreground and background of the icon image are separated, and alpha blended into the dashboard image. In this case, the foreground of the icon image is partially blended, while the background of the icon image is completely blended. Here, the foreground of the icon image is the icon portion of the icon image (pixels (black portion) of the bit "one" of the mask image MSB in Fig. 13). The background of the icon image is a portion other than the icon of the icon image (the pixel of the bit "zero" of the mask image MSB in Fig. 13 (white portion)). In the background of the icon image, the icon image is blended at a ratio of zero, and the dashboard image DIM is one. In the foreground of the icon image, the icon image is blended at a ratio of a, and the dashboard image DIM is blended at a ratio of (1-a). 0 < a < 1. The icon blended at the rate $\alpha$ is the foreground in the display image, the other region is the background in the display image.

In the present embodiment, the relationship between the icon and the original icon is analyzed, and it is checked whether the icon is correctly displayed. Specifically, an edge detection technique (for example, Sobel edge detection convolution operator) is used to detect an edge in the region of interest as in the case of the reference.

Fig. 13 shows a first example of a reference image, a display image (region of interest), and a mask image. A mask image MSB is a mask showing a foreground and a background of a reference image ICB. Black shows foreground pixels, and white shows background pixels. The reference image ICB (reference icon) is the image in which the foreground (icon, the gray portion in the figure) is colored. The display image CIB (display icon) is an image (image of a region of interest) obtained by blending the reference image ICB with the dashboard image DIM. In the icon portion, the dashboard image DIM is visible through blending.

Fig. 14 shows an example of edge values calculated from the reference image and the display image. EICB is an edge image of a reference image ICB, and ECIB is an edge image of the display image CIB. For the sake of illustration, the edge is indicated by the black line and gray line, but the intensity of the edge can actually be shown in gray scale (white: high intensity edge, black: no edge). The edge detection is performed on the luminance channel. Similarly, edge detection is performed on the color channel or in the color space such as YCbCr.

Edges in the foreground region and the background region are calculated for the reference image and the display image, and the shape index is calculated by calculating an amount of similarity as shown in the following expressions (5) to (16). Match of the following expression (16) is the shape index (adaptive value). Hereinafter, it is assumed that the reference image has a size of m × n pixels and the region of interest of the display image is also m × n pixels.

The following expression (5) is the horizontal Sobel kernel (an operator of a Sobel for filter detecting the edge in the horizontal direction). The following expression (6) is the vertical Sobel kernel (an operator of a Sobel filter for detecting the edge in the vertical direction).

[Math. 5]

$$F_H = \begin{bmatrix} 1 & 0 & -1 \\ 2 & 0 & -2 \\ 1 & 0 & -1 \end{bmatrix} \tag{5}$$

[Math. 6]

$$F_V = \begin{bmatrix} 1 & 2 & 1 \\ 0 & 0 & 0 \\ -1 & -2 & -1 \end{bmatrix} \tag{6}$$

As shown in the following expressions (7) to (12), the edge value is calculated in each pixel position in the region of interest of the reference image and the display image. "*" is a convolution operator. N is a normalization factor for keeping the value between zero and one, where N = 4. IRef is the luminance channel (Y) of the reference image. $IRef_{(x,y)}$ is the pixels at the position x, y of the luminance channel of the reference image. x is an integer ($0 < x \leq m$), and y is an integer ($0 < y \leq n$). IRen is the luminance channel of the display image in the region of interest. $Iren_{(x,y)}$ is the pixel at the position x, y of the luminance channel of the display image in the region of interest.

[Math. 7]

$$\mathbf{E1}_{(x,y)} = \frac{\begin{bmatrix} E1_H \\ E1_V \end{bmatrix}_{(x,y)}}{N} \tag{7}$$

[Math. 8]

$$E1_{H(x,y)} = F_H * IRef_{(x,y)} \tag{8}$$

[Math. 9]

$$E1_{V(x,y)} = F_V * IRef_{(x,y)} \tag{9}$$

[Math. 10]

$$\mathbf{E2}_{(x,y)} = \frac{\begin{bmatrix} E2_H \\ E2_V \end{bmatrix}_{(x,y)}}{N} \qquad (10)$$

[Math. 11]

$$E2_{H(x,y)} = F_H * IRen_{(x,y)} \qquad (11)$$

[Math. 12]

$$E2_{V(x,y)} = F_V * IRen_{(x,y)} \qquad (12)$$

As shown in the following expressions (13) to (16), the shape index Match (adaptive value) is calculated from the edge value. **"•"** represents an inner product operator.

[Math. 13]

$$S = \sum_{y=0}^{n} \sum_{x=0}^{m} \mathbf{E1}_{(x,y)} \cdot \mathbf{E2}_{(x,y)} \qquad (13)$$

[Math. 14]

$$T1 = \sum_{y=0}^{n} \sum_{x=0}^{m} \mathbf{E1}_{(x,y)} \cdot \mathbf{E1}_{(x,y)} \qquad (14)$$

[Math. 15]

$$T2 = \sum_{y=0}^{n} \sum_{x=0}^{m} \mathbf{E2}_{(x,y)} \cdot \mathbf{E2}_{(x,y)} \qquad (15)$$

[Math. 16]

$$Match = \frac{S}{(T1+T2)/2} \qquad (16)$$

When the operation described above is applied to Figs. 13 and 14, Match = 0.78.

In a case where it is required to calculate the adaptive value without analyzing the background, the calculations shown in the following expressions (17) to (22) are used.

[Math. 17]

$$\mathbf{E1}_{(x,y)}^{f} = \mathbf{E1}_{(x,y)} M_{(x,y)} \qquad (17)$$

[Math. 18]

$$\mathbf{E2}^{f}_{(x,y)} = \mathbf{E2}_{(x,y)} M_{(x,y)} \tag{18}$$

[Math. 19]

$$S^{f} = \sum_{y=0}^{n} \sum_{x=0}^{m} \mathbf{E1}^{f}_{(x,y)} \cdot \mathbf{E2}^{f}_{(x,y)} \tag{19}$$

[Math. 20]

$$T1^{f} = \sum_{y=0}^{n} \sum_{x=0}^{m} \mathbf{E1}^{f}_{(x,y)} \cdot \mathbf{E1}^{f}_{(x,y)} \tag{20}$$

[Math. 21]

$$T2^{f} = \sum_{y=0}^{n} \sum_{x=0}^{m} \mathbf{E2}^{f}_{(x,y)} \cdot \mathbf{E2}^{f}_{(x,y)} \tag{21}$$

[Math. 22]

$$Match = \frac{S^{f}}{\left(T1^{f} + T2^{f}\right)/2} \tag{22}$$

$M_{(x,y)}$ means a mask pixel that defines which pixel belongs to the background and which pixel belongs to the foreground. The mask is implemented with a simple one-bit mask that defines the background as zero and the foreground as one. Alternatively, the mask may be a mask of one bit or more supporting an anti-aliased edge. In the mask, values between one and zero are treated as partial background and partial foreground. For example, the value with 0.25 (01 in 2-bit notation) means 25% foreground and 75% background.

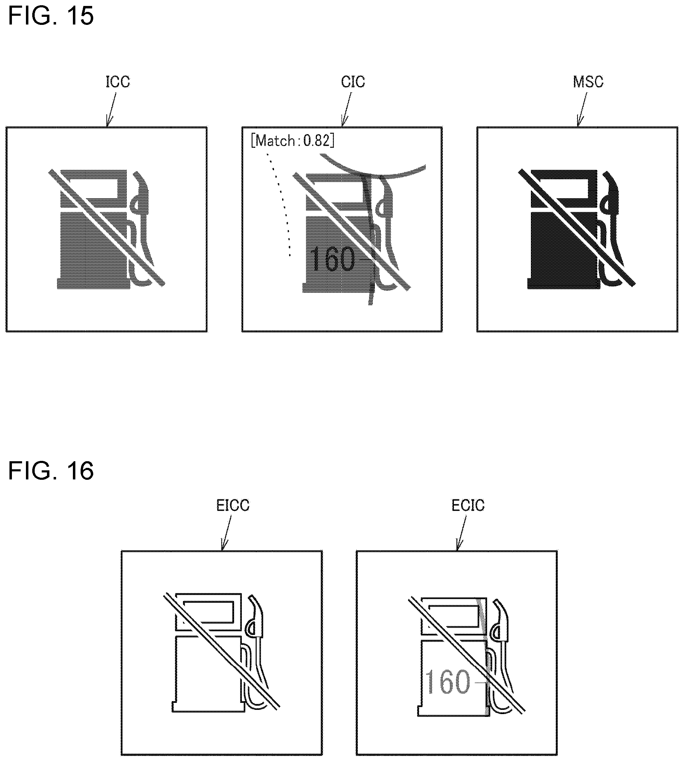

Fig. 15 shows a second example of a reference image, a display image (region of interest), and a mask image. The reference image ICC, the display image CIC, and the mask image MSC are the same as the reference image ICB, the display image CIB, and the mask image MSB in Fig. 13. Fig. 16 shows an example of edge values calculated from the reference image and the display image. EICC is the edge image of the reference image ICC and ECIC is the edge image of the display image CIC. In the edge image ECIC of the display image, the edge component of the outside (background) of the icon is masked by $M_{(x,y)}$. As shown in Fig. 15, the shape index Match increases to 0.82 in the operation.

According to the embodiment described above, the error detection circuit 150 calculates the index (shape index) indicating the degree of coincidence between the foreground image that is the image of the given region of the display image and the reference image based on the pixel values and the display image and the pixel values of the reference image serving as the foreground image, or based on the pixel values (edge amount) of the edge image of the display image and the pixel values (edge amount) of the edge image of the reference image, and performs error detection on the display image based on the index.

In this way, it is possible to perform error detection on the display image based on the index indicating the degree of coincidence between the foreground image of the display image and the reference image, rather than bit error detection like CRC. When the degree of coincidence of the foreground image with respect to the reference image is high, the foreground image is highly likely to visually look the same shape as the reference image. That is, according to the present method, it is possible to determine that the error occurs when the shape of the foreground image is not correctly displayed. For example, on a vehicle-mounted meter panel or the like, an icon or the like for warning the user is displayed. According to the present embodiment, it is possible to display as much as possible in a case where a shape can be correctly recognized without stopping the display of the icon due to the one-bit error or the like, and to warn the user.

Here, the first operation method (the above expressions (3) to (5)) corresponds to the case of calculating the index (S) based on the pixel values of the display image and the pixel values of the reference image serving as the reference of the foreground image. In addition, the second operation method (the above expressions (5) to (22)) corresponds to the case of calculating the index (Match) based on the pixel values of the edge images of the display image and the pixel values of the edge images of the reference images. The pixel values of the edge image correspond to the edge amounts of the above expressions (7), (10), (17) and (18).

Further, the degree of coincidence is the degree of coincidence of shapes of, for example, icons, characters, figures, marks (hereinafter, referred to as icons or the like). More specifically, the degree is the degree of direction and outline of the icons or the like. Still further, the degree may include the degree of coincidence of the states inside the outline of the icon or the like (for example, whether the inside of the outline is filled or not). For example, the index indicating the degree of coincidence becomes greater as the degree of coincidence between the foreground image and the background image is high.

In the present embodiment, the error detection circuit 150 performs sub-sampling that reduces the number of pixels or resolutions of the display image and the reference image (Fig. 9). The error detection circuit 150 obtains distance information representing the distance in the color space between the pixel value of the sub-sampled display image and the pixel value of the sub-sampled reference image (the above expression (2)), and calculates the index from the distance information (the above expressions (3) and (4)).

Since the pixel values are averaged by performing sub-sampling, it is possible to reduce the influence of noise of a one-bit error (minor error that does not affect the shape) when the index is calculated. Further, the distance in the color space between the pixel value of the display image and the pixel value of the reference image has to become small (short) when the shapes coincide with each other. For this reason, it is possible to appropriately evaluate the degree of coincidence of shape by using the distance in the color space.

In the present embodiment, the error detection circuit 150 calculates the index (S) from the value obtained by dividing the given threshold (T in the above expressions (3) and (4)) by distance information (D).

Since the distance (D) decreases as the degree of coincidence of shape increases, it is possible to calculate the index (S) that increases as the degree of coincidence of shapes increases by dividing a given threshold by distance information.

In the present embodiment, the error detection circuit 150 performs the product-sum operation (the above expression (13)) of the pixel values of the edge image of the display image and the edge image of the reference image, and calculates the index from the result of the product-sum operation (the above expression (16)).

The edge image is an image in which the edge amount is defined as the pixel value of each pixel. In a case where the shapes coincide with each other, when the edge image of the display image and the edge image of the reference image are compared in the same pixel, the edge amounts of the images should be the same (approximately same). Conversely, in a case where the shapes do not coincide with each other, since the positions of the edges of the display image and the reference image do not coincide with each other, even if the edge image of the display image contains a large edge amount, for example, the edge amount is zero in the same pixel of the edge image of the reference image. Therefore, when the product-sum of the edge amounts of the same pixels is performed, the result of the product-sum is a large value if the shapes coincides with each other, and the result of the product-sum is a small value if the shapes do not coincide with each other. As a result, by using the product-sum operation of the edge amount, it is possible to appropriately evaluate the degree of coincidence of shapes.

Here, in the above expression (13), the "product" of the product-sum is an inner product of vectors, but the "product" is not limited thereto. For example, when the edge amount is defined as a scalar, the "product" is a product of scalars.

In addition, in the present embodiment, the error detection circuit 150 masks the region corresponding to the background image in the edge image of the display image (the above expression (18)), and performs the product-sum operation by using the masked edge image of the display image (the above expression (19)).

In this way, even in a case where the edge is included in the background, it is possible to mask the edge and perform the product-sum operation of the edge amount. That is, since the degree of coincidence between the edges of the display image and the reference image is evaluated without being affected by the edge of the background, it is possible to further improve the accuracy of error detection.

Further, the present embodiment can be practiced as the following error detection method. That is, in the method, the index indicating the degree of coincidence between the foreground image that is the image of the given region in the display image and the reference image is calculated based on the pixel values of the display image and the pixel values of the reference image serving as the reference of the foreground image, or based on the pixel values of the edge image of the display image and the pixel values of the edge image of the reference image, and error detection is performed on the display image based on the index.

Further, the present embodiment can be practiced as the following error detection method. That is, in the method, the region of interest of the display image is analyzed, and the index describing the similarity with the reference image is calculated. The index is operated using the following technique (a) or (b): (a) three-dimensional distance errors of the sub-sampled pixels of the display image and the reference image (base signal) are compared; and (b) three-dimensional distance errors of the edges of the display image and the reference image (the first derivative of the image) are compared.

3. Modification Example

In the above embodiment, the case of applying the error detection method of the present invention to the display controller (Timing Controller; TCON) has been described by way of example, but an applicable object of the present invention is not limited thereto. That is, the present invention can also be applied to any stage in the course of processing or transmitting the display image.

For example, the display driver for driving the display panel may be used as the circuit device to which the present invention is applied. In this case, for example, in the display driver, the interface to which the image data is input corresponds to the image acquisition circuit, and the error detection circuit is provided between the interface and a driving circuit. For example, without performing overlaying or the like, the error detection circuit performs error detection of the present invention on a given region (such as an icon) of the image received by the interface.

In the embodiment described above, the case where the image acquisition circuit 130 generates the display image by overlaying an icon on the image input to the display controller and preprocessed (hereinafter, referred to input image) has been described by way of example, but an applicable object of the present invention is not limited thereto. That is, the image acquisition circuit 130 can acquire any image as the display image.

For example, the image acquisition circuit 130 may use the input image itself to the display image. In this case, an icon, for example, is already included in the input image, and the region including the icon or the like is set as a region of interest.

Alternatively, the image acquisition circuit 130 may use the image obtained by performing scaling on the input image as the display image. In this case, for example, an icon is included in the input image, the icon is scaled, and a region including the scaled icon is set as a region of interest.

Alternatively, the image acquisition circuit 130 may use the image obtained by performing gamma conversion processing (gradation conversion processing) on the input image as the display image. In this case, for example, an icon is included in the input image, the icon is gamma converted, and a region including gamma converted icon is set as a region of interest.

Alternatively, the image acquisition circuit 130 may use an image obtained by deforming the input image as the display image. In this case, for example, an icon is included in the input image, the icon (or the whole input image) is deformed, and a region including the deformed icon is set as a region of interest. For example, an image may be deformed so as to be displayed on a head mounted display.

Alternatively, the image acquisition circuit 130 may read the image stored in the memory, and use the image as the display image. In this case, a memory controller corresponds to the image acquisition circuit 130. Alternatively, the image acquisition circuit 130 may use the image received by the interface as the display image. In this case, the interface corresponds to the image acquisition circuit 130.

4. Electronic Apparatus

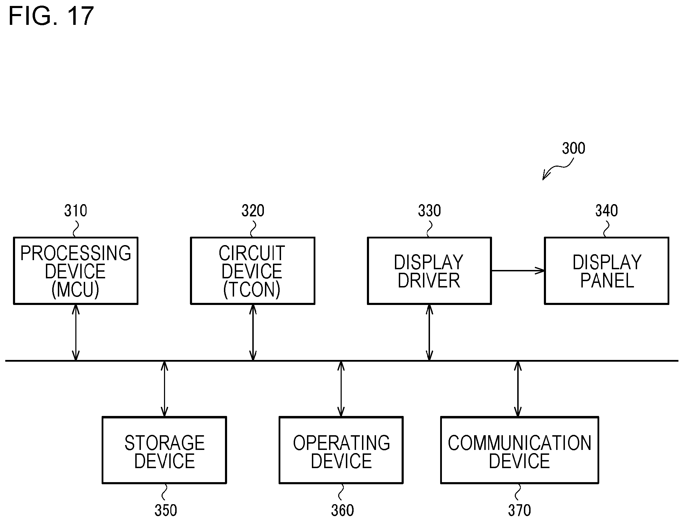

Fig. 17 shows a constructional example of an electronic apparatus including the circuit device of the present embodiment. The electronic apparatus 300 includes a processing device 310 (for example, MCU), a circuit device 320 (TCON), a display driver 330, a display panel 340, a storage device 350, an operating device 360, and a communication device 370.

The processing device 310 transmits the image data stored in the storage device 350 or the image data received by the communication device 370 to the circuit device 320. The circuit device 320 performs image processing on the image data, display timing control, error detection processing (calculating the index of visibility and the shape index), and the like on the image data transmitted to the display driver. The display driver 330 drives the display panel 340 and display the image based on the image data transmitted from the circuit device 320 and the display timing control by the circuit device 320. The display panel 340 is, for example, a liquid crystal display panel or electroluminescent (EL) display panel. The storage device 350 is, for example, a memory, a hard disk drive, or an optical disk drive. The operating device 360 is a device for a user to operate the electronic apparatus 300, and is, for example, a button, a touch panel, or a keyboard. The communication device 370 is, for example, a device to perform wired communication (LAN, USB, or the like), or a device to perform wireless communication (WiFi, Bluetooth, or the like).

As the electronic apparatus including the circuit device of the present embodiment, various apparatuses such as an electronic apparatus (such as a meter panel) mounted on a vehicle, a display terminal such as a factory facility, a display device mounted on a robot, an information processing device (such PC), or a portable information processing terminal (such as a smartphone) can be presented. The configuration of the electronic apparatus is not limited to Fig.

17, and the electronic apparatus can be configured in various forms according to applications. For example, in the electronic apparatus mounted on the vehicle, the circuit device 320, the display driver 330, the display panel 340, and the operating device 360 are incorporated in the meter panel, and the processing device 310, the storage device 350, and the communication device 370 are incorporated in an Electronic Control Unit (ECU). In this case, the meter panel corresponds to the electronic apparatus including the circuit device of the present embodiment.

Although the present embodiment has been described in detail, the configurations, operations, or the like of circuit device and the electronic apparatus are not limited to the present embodiment, and various modifications can be made, as long as said modifications are covered by the appended claims.

[Reference Signs List]

| | |
|---|---|
| 100: | circuit device |
| 110: | interface |
| 120: | pre-processing circuit |
| 130: | image acquisition circuit |
| 140: | interface |
| 150: | error detection circuit |
| 160: | CRC circuit |
| 170: | register circuit |
| 180: | icon processing circuit |
| 190: | interface |
| 195: | memory |
| 200: | processing device |
| 300: | electronic apparatus |
| 310: | processing device |
| 320: | circuit device |
| 330: | display driver |
| 340: | display panel |
| 350: | storage device |
| 360: | operating device |
| 370: | communication device |
| A1: | region of interest |
| A2: | icon (foreground) |
| ECIB: | edge image |
| MSB: | mask image |
| RIA: | reference image |
| SRef: | averaged image |

**Claims**

1. A circuit device (100) comprising:

    an image acquisition circuit (130) that acquires a display image; and
    an error detection circuit (150) that performs error detection of the display image,
    wherein the error detection circuit calculates a histogram of pixel values of the display image, performs a correlation operation using the histogram, calculates an index indicating a degree of dissimilarity between a foreground image that is an image of a given region in the display image and a background image that corresponds to a background of the foreground image in the display image based on a result of correlation operation, and performs the error detection based on the index,
    **characterized in that** the error detection circuit (150) calculates the histogram of each of constituent components of a color space, performs an autocorrelation operation on the histogram of each of the constituent components, calculates a distance at which a peak of the autocorrelation occurs with respect to each constituent component, and calculates the index based on the maximum distance of the calculated distances.

2. A circuit device (100) comprising:

an image acquisition circuit (130) that acquires a display image; and
an error detection circuit (150) that performs error detection of the display image,
wherein the error detection circuit calculates a histogram of pixel values of the display image, performs a correlation operation using the histogram, calculates an index indicating a degree of dissimilarity between a foreground image that is an image of a given region in the display image and a background image that corresponds to a background of the foreground image in the display image based on a result of correlation operation, and performs the error detection based on the index,
**characterized in that** the error detection circuit (150) calculates a first histogram of each of constituent components of a color space from the display image as the histogram, calculates a second histogram of each of the constituent components from a reference image corresponding to the foreground image, performs a cross-correlation operation on the first histogram and the second histogram for each of the constituent components, and calculates the index based on a peak value of a peak of the cross-correlation.

3. The circuit device (100) according to claim 1 or claim 2, wherein the error detection circuit (150) calculates a second index indicating a degree of coincidence between the foreground image that is the image of the given region in the display image and a reference image based on the pixel values of the display image and pixel values of the reference image serving as a reference of the foreground image, or an edge of the display image and an edge of the reference image, and performs the error detection based on the index and the second index.

4. The circuit device (100) according to any one of claims 1 to 3,

wherein the image acquisition circuit (130) generates the display image by overlaying a second image in the given region on a first image, and
the background image is an image corresponding to the first image in the display image.

5. An electronic apparatus (300) comprising the circuit device (100) according to any one of claims 1 to 4.

6. An error detection method comprising:

calculating a histogram of pixel values of a display image;
performing a correlation operation using the histogram;
calculating an index indicating a degree of dissimilarity between a foreground image that is an image of a given region in the display image and a background image that corresponds to a background of the foreground image in the display image based on a result of the correlation operation; and
performing error detection on the display image based on the index;
**characterized in that** the step of calculating a histogram comprises calculating the histogram of each of constituent components of a color space, the step of performing a correlation operation comprises performing an autocorrelation operation on the histogram of each of the constituent components, and the step of calculating an index comprises calculating a distance at which a peak of the autocorrelation occurs with respect to each constituent component, and calculating the index based on the maximum distance of the calculated distances.

7. An error detection method comprising:

calculating a histogram of pixel values of a display image;
performing a correlation operation using the histogram;
calculating an index indicating a degree of dissimilarity between a foreground image that is an image of a given region in the display image and a background image that corresponds to a background of the foreground image in the display image based on a result of correlation operation; and
performing error detection on the display image based on the index;
**characterized in that** the step of calculating a histogram comprises calculating a first histogram of each of constituent components of a color space from the display image as the histogram and calculating a second histogram of each of the constituent components from a reference image corresponding to the foreground image, the step of performing a correlation operation comprises performing a cross-correlation operation on the first histogram and the second histogram for each of the constituent components, and the step of calculating an index comprises calculating the index based on a peak value of a peak of the cross-correlation.

**Patentansprüche**

1. Schaltungsvorrichtung (100), umfassend:

   eine Bildaufnahmeschaltung (130), die ein Anzeigebild aufnimmt; und
   eine Fehlererkennungsschaltung (150), die Fehlererkennung des Anzeigebilds durchführt,
   wobei die Fehlererkennungsschaltung ein Histogramm von Pixelwerten des Anzeigebilds berechnet, eine Korrelationsoperation unter Verwendung des Histogramms durchführt, einen Index, der einen Grad an Unähnlichkeit zwischen einem Vordergrundbild, das ein Bild einer bestimmten Region in dem Anzeigebild ist, und einem Hintergrundbild, das einem Hintergrund des Vordergrundbilds in dem Anzeigebild entspricht, angibt, basierend auf einem Ergebnis der Korrelationsoperation berechnet und die Fehlererkennung basierend auf dem Index durchführt,
   **dadurch gekennzeichnet, dass** die Fehlererkennungsschaltung (150) das Histogramm jeder von Bestandteilkomponenten eines Farbraums berechnet, eine Autokorrelationsoperation an dem Histogramm jeder der Bestandteilkomponenten durchführt, eine Distanz, bei der eine Spitze der Autokorrelation in Bezug auf jede Bestandteilkomponente auftritt, berechnet und den Index basierend auf der maximalen Distanz der berechneten Distanzen berechnet.

2. Schaltungsvorrichtung (100), umfassend:

   eine Bildaufnahmeschaltung (130), die ein Anzeigebild aufnimmt; und
   eine Fehlererkennungsschaltung (150), die Fehlererkennung des Anzeigebilds durchführt,
   wobei die Fehlererkennungsschaltung ein Histogramm von Pixelwerten des Anzeigebilds berechnet, eine Korrelationsoperation unter Verwendung des Histogramms durchführt, einen Index, der einen Grad an Unähnlichkeit zwischen einem Vordergrundbild, das ein Bild einer bestimmten Region in dem Anzeigebild ist, und einem Hintergrundbild, das einem Hintergrund des Vordergrundbilds in dem Anzeigebild entspricht, angibt, basierend auf einem Ergebnis der Korrelationsoperation berechnet und die Fehlererkennung basierend auf dem Index durchführt,
   **dadurch gekennzeichnet, dass** die Fehlererkennungsschaltung (150) ein erstes Histogramm jeder von Bestandteilkomponenten eines Farbraums aus dem Anzeigebild als das Histogramm berechnet, ein zweites Histogramm jeder der Bestandteilkomponenten aus einem Referenzbild entsprechend dem Vordergrundbild berechnet, eine Kreuzkorrelationsoperation an dem ersten Histogramm und dem zweiten Histogramm für jede der Bestandteilkomponenten durchführt, und den Index basierend auf einem Spitzenwert einer Spitze der Kreuzkorrelation berechnet.

3. Schaltungsvorrichtung (100) nach Anspruch 1 oder Anspruch 2, wobei die Fehlererkennungsschaltung (150) einen zweiten Index, der einen Grad an Übereinstimmung zwischen dem Vordergrundbild, das das Bild der bestimmten Region in dem Anzeigebild ist, und einem Referenzbild angibt, basierend auf den Pixelwerten des Anzeigebilds und Pixelwerten des Referenzbilds, das als eine Referenz des Vordergrundbilds dient, oder einem Rand des Anzeigebilds und einem Rand des Referenzbilds berechnet und die Fehlererkennung basierend auf dem Index und dem zweiten Index durchführt.

4. Schaltungsvorrichtung (100) nach einem der Ansprüche 1 bis 3,

   wobei die Bildaufnahmeschaltung (130) das Anzeigebild durch Überlagern eines zweiten Bilds in der bestimmten Region auf ein erstes Bild erzeugt, und
   das Hintergrundbild ein Bild ist, das dem ersten Bild in dem Anzeigebild entspricht.

5. Elektronische Vorrichtung (300), umfassend die Schaltungsvorrichtung (100) nach einem der Ansprüche 1 bis 4.

6. Fehlererkennungsverfahren, umfassend:

   Berechnen eines Histogramms von Pixelwerten eines Anzeigebilds;
   Durchführen einer Korrelationsoperation unter Verwendung des Histogramms;
   Berechnen eines Index, der einen Grad an Unähnlichkeit zwischen einem Vordergrundbild, das ein Bild einer bestimmten Region in dem Anzeigebild ist, und einem Hintergrundbild, das einem Hintergrund des Vordergrundbilds in dem Anzeigebild entspricht, angibt, basierend auf einem Ergebnis der Korrelationsoperation; und
   Durchführen einer Fehlererkennung an dem Anzeigebild basierend auf dem Index;

**dadurch gekennzeichnet, dass** der Schritt zum Berechnen eines Histogramms Berechnen des Histogramms jeder der Bestandteilkomponenten eines Farbraums umfasst, der Schritt zum Durchführen einer Korrelationsoperation Durchführen einer Autokorrelationsoperation an dem Histogramm jeder der Bestandteilkomponenten umfasst und der Schritt zum Berechnen eines Index Berechnen einer Distanz, bei der eine Spitze der Autokorrelation in Bezug auf jede Bestandteilkomponente auftritt, und Berechnen des Index basierend auf der maximalen Distanz der berechneten Distanzen umfasst.

**7.** Fehlererkennungsverfahren, umfassend:

Berechnen eines Histogramms von Pixelwerten eines Anzeigebilds;
Durchführen einer Korrelationsoperation unter Verwendung des Histogramms;
Berechnen eines Index, der einen Grad an Unähnlichkeit zwischen einem Vordergrundbild, das ein Bild einer bestimmten Region in dem Anzeigebild ist, und einem Hintergrundbild, das einem Hintergrund des Vordergrundbilds in dem Anzeigebild entspricht, angibt, basierend auf einem Ergebnis der Korrelationsoperation; und
Durchführen einer Fehlererkennung an dem Anzeigebild basierend auf dem Index;
**dadurch gekennzeichnet, dass** der Schritt zum Berechnen eines Histogramms Berechnen eines ersten Histogramms jeder von Bestandteilkomponenten eines Farbraums aus dem Anzeigebild als das Histogramm und Berechnen eines zweiten Histogramms jeder der Bestandteilkomponenten aus einem Referenzbild entsprechend dem Vordergrundbild umfasst, der Schritt zum Durchführen einer Korrelationsoperation Durchführen einer Kreuzkorrelationsoperation an dem ersten Histogramm und dem zweiten Histogramm für jede der Bestandteilkomponenten umfasst und der Schritt zum Berechnen eines Index Berechnen des Index basierend auf einem Spitzenwert einer Spitze der Kreuzkorrelation umfasst.

## Revendications

**1.** Dispositif de circuit (100) comprenant :

un circuit d'acquisition d'image (130) qui acquiert une image d'affichage ; et
un circuit de détection d'erreur (150) qui effectue une détection d'erreur de l'image d'affichage,
dans lequel le circuit de détection d'erreur calcule un histogramme de valeurs de pixel de l'image d'affichage, effectue une opération de corrélation en utilisant l'histogramme, calcule un indice indiquant un degré de dissemblance entre une image d'avant-plan qui est une image d'une zone donnée dans l'image d'affichage et une image d'arrière-plan qui correspond à un arrière-plan de l'image d'avant-plan dans l'image d'affichage sur la base d'un résultat de l'opération de corrélation, et effectue la détection d'erreur sur la base de l'indice,
**caractérisé en ce que** le circuit de détection d'erreur (150) calcule l'histogramme de chacun des composants constitutifs d'un espace colorimétrique, effectue une opération d'autocorrélation pour l'histogramme de chacun des composants constitutifs, calcule une distance à laquelle un pic de l'autocorrélation apparaît par rapport à chaque composant constitutif, et calcule l'indice sur la base de la distance maximale des distances calculées.

**2.** Dispositif de circuit (100) comprenant :

un circuit d'acquisition d'image (130) qui acquiert une image d'affichage ; et
un circuit de détection d'erreur (150) qui effectue une détection d'erreur de l'image d'affichage,
dans lequel le circuit de détection d'erreur calcule un histogramme de valeurs de pixel de l'image d'affichage, effectue une opération de corrélation en utilisant l'histogramme, calcule un indice indiquant un degré de dissemblance entre une image d'avant-plan qui est une image d'une zone donnée dans l'image d'affichage et une image d'arrière-plan qui correspond à un arrière-plan de l'image d'avant-plan dans l'image d'affichage sur la base d'un résultat de l'opération de corrélation, et effectue la détection d'erreur sur la base de l'indice,
**caractérisé en ce que** le circuit de détection d'erreur (150) calcule un premier histogramme de chacun des composants constitutifs d'un espace colorimétrique à partir de l'image d'affichage en tant que l'histogramme, calcule un deuxième histogramme de chacun des composants constitutifs à partir d'une image de référence correspondant à l'image d'avantplan, effectue une opération de corrélation croisée pour le premier histogramme et le deuxième histogramme pour chacun des composants constitutifs, et calcule l'indice sur la base d'une valeur de pic d'un pic de la corrélation croisée.

**3.** Dispositif de circuit (100) selon la revendication 1 ou la revendication 2, dans lequel le circuit de détection d'erreur (150) calcule un deuxième indice indiquant un degré de coïncidence entre l'image d'avant-plan qui est l'image de la zone donnée dans l'image d'affichage et une image de référence sur la base des valeurs de pixel de l'image d'affichage et de valeurs de pixel de l'image de référence servant de référence de l'image d'avant-plan, ou un bord de l'image d'affichage et un bord de l'image de référence, et effectue la détection d'erreur sur la base de l'indice et du deuxième indice.

4. Dispositif de circuit (100) selon l'une quelconque des revendications 1 à 3,

dans lequel le circuit d'acquisition d'image (130) génère l'image d'affichage par superposition d'une deuxième image dans la zone donnée à une première image, et
l'image d'arrière-plan est une image correspondant à la première image dans l'image d'affichage.

5. Appareil électronique (300) comprenant le dispositif de circuit (100) selon l'une quelconque des revendications 1 à 4.

6. Procédé de détection d'erreur comprenant :

le calcul d'un histogramme de valeurs de pixel d'une image d'affichage ;
la réalisation d'une opération de corrélation en utilisant l'histogramme ;
le calcul d'un indice indiquant un degré de dissemblance entre une image d'avant-plan qui est une image d'une zone donnée dans l'image d'affichage et une image d'arrière-plan qui correspond à un arrière-plan de l'image d'avant-plan dans l'image d'affichage sur la base d'un résultat de l'opération de corrélation ; et
la réalisation d'une détection d'erreur pour l'image d'affichage sur la base de l'indice ;
**caractérisé en ce que** l'étape de calcul d'un histogramme comprend le calcul de l'histogramme de chacun des composants constitutifs d'un espace colorimétrique, l'étape de réalisation d'une opération de corrélation comprend la réalisation d'une opération d'autocorrélation pour l'histogramme de chacun des composants constitutifs, et l'étape de calcul d'un indice comprend le calcul d'une distance à laquelle un pic de l'autocorrélation apparaît par rapport à chaque composant constitutif, et le calcul de l'indice sur la base de la distance maximale des distances calculées.

7. Procédé de détection d'erreur comprenant :

le calcul d'un histogramme de valeurs de pixel d'une image d'affichage ;
la réalisation d'une opération de corrélation en utilisant l'histogramme ;
le calcul d'un indice indiquant un degré de dissemblance entre une image d'avant-plan qui est une image d'une zone donnée dans l'image d'affichage et une image d'arrière-plan qui correspond à un arrière-plan de l'image d'avant-plan dans l'image d'affichage sur la base d'un résultat de l'opération de corrélation ; et
la réalisation d'une détection d'erreur pour l'image d'affichage sur la base de l'indice ;
**caractérisé en ce que** l'étape de calcul d'un histogramme comprend le calcul d'un premier histogramme de chacun des composants constitutifs d'un espace colorimétrique à partir de l'image d'affichage en tant que l'histogramme et le calcul d'un deuxième histogramme de chacun des composants constitutifs à partir d'une image de référence correspondant à l'image d'avant-plan, l'étape de réalisation d'une opération de corrélation comprend la réalisation d'une opération de corrélation croisée pour le premier histogramme et le deuxième histogramme pour chacun des composants constitutifs, et l'étape de calcul d'un indice comprend le calcul de l'indice sur la base d'une valeur de pic d'un pic de la corrélation croisée.

FIG. 1

FIG. 2

FIG. 3

FIG. 4

# FIG. 5

[Vis : 0.722, Shape : 1.000]

A2

A1

FIG. 6

FIG. 7

FIG. 8

FIG. 9

FIG. 10

## FIG. 11

[Vis : 0.514,Shape : 0.110]

E2

E1

## FIG. 12

DIM

ICA

080088

RPM

FIG. 13

ICB

CIB

MSB

[Match: 0.78]

160

FIG. 14

EICB

ECIB

160

FIG. 15

ICC

CIC

MSC

[Match:0.82]

160

FIG. 16

EICC

ECIC

160

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012035677 A
- JP 2007101691 A

- JP 2007072394 A

**Non-patent literature cited in the description**

- Enhancing the Error Detection Capabilities of the Standard Video Decoder using Pixel Domain Dissimilarity Metrics. **FARRUGIA R A et al.** EUROCON, 2007. THE INTERNATIONAL CONFERENCE ON "COMPUTER AS A TOOL. IEEE, 09 September 2007, 1085-1090